# EUROPÄISCHE PATENTSCHRIFT

(11) **EP 2 882 974 B1**
(45) Veröffentlichungstag und Bekanntmachung des Hinweises auf die Patenterteilung: **14.09.2016**
(21) Anmeldenummer: 13740222.8
(22) Anmeldetag: 12.07.2013
(51) Int. Cl.: F16D 13/75, F16D 25/12

(54) **VERSCHLEISSAUSGLEICHENDES BETÄTIGUNGSELEMENT FÜR EINE KUPPLUNG**
WEAR-COMPENSATING ACTUATION ELEMENT FOR A CLUTCH
ÉLÉMENT D'ACTIONNEMENT COMPENSATEUR D'USURE POUR EMBRAYAGE

(30) Priorität: 13.08.2012 DE 102012214347
(43) Veröffentlichungstag der Anmeldung: 17.06.2015
(73) Patentinhaber: ZF Friedrichshafen AG, 88046 Friedrichshafen (DE)
(72) Erfinder: MÄDER, Fred, 97532 Üchtelhausen (DE)
(86) Internationale Anmeldenummer: PCT/EP2013/064750
(87) Internationale Veröffentlichungsnummer: WO 2014/026807

(56) Entgegenhaltungen:
- EP-A1- 0 623 760
- DE-A1-102009 015 148
- FR-A1- 2 653 719
- GB-A- 1 200 795
- US-A- 4 181 209

## Beschreibung

Ausführungsbeispiele der vorliegenden Erfindung befassen sich mit einem verschleißausgleichenden Betätigungselement für eine Kupplung, beispielsweise die Kupplung in einem Pkw.

Die Betätigung von Kupplungen, die einen Kraftfluss in einem Antriebsstrang trennen und wieder herstellen, beispielsweise um einen Gangwechsel mit einem Schaltgetriebe zu ermöglichen, erfolgt in zunehmendem Maß auch durch Aktuatoren bzw. Elektromotoren. Eine derart automatisierte Betätigung kann beispielsweise den Führer eines Kraftfahrzeugs entlasten.

Zur Kompensation des bei Reibungskupplungen auftretenden Verschleißes über die Lebensdauer werden dabei bei solchen "automatisierten Schaltsystemen" häufig verschleißausgleichende Stößel eingesetzt, die sich zwischen dem Aktuator und der Kupplung befinden, um die Ansteuerung der Aktuatorik einfach zu halten. Diese verschleißausgleichenden Stößel können durch Variation ihrer Länge den in der Kupplung auftretenden Verschleiß ausgleichen.

Herkömmliche verschleißausgleichende Verbindungselemente zum Übertragen einer zur Betätigung einer Kupplung erforderlichen Kraft bei gleichzeitigem Ausgleich des Verschleißes der Kupplung benötigen einen erheblichen Bauraum, da diese in der Betätigungsrichtung zwischen dem linear beweglichen Aktuator und dem Betätigungshebel der Kupplung angeordnet werden, sodass insgesamt eine Baugruppe mit einer erheblichen Längenausdehnung entsteht.

Aus der gattungsbildenden FR 2 653 719 A1 geht ein Betätigungselement für eine Kupplung hervor. Dieses weist eine Schlingfeder auf.

Es besteht die Notwendigkeit, verschleißausgleichende Betätigungselemente für eine Kupplung bereitzustellen, die einen geringen Bauraum benötigen und hohe Ausrückkräfte übertragen können.

Ausführungsbeispiele der vorliegenden Erfindung ermöglichen dies, indem die Kraftübertragung und der Verschleißausgleich über ein Betätigungselement mit einer Schlingfeder realisiert werden. Zu diesem Zweck weisen die Ausführungsbeispiele der vorliegenden Erfindung einen bezüglich einer Achse drehbaren Mitnehmer zur Anbindung an die Kupplung auf, welcher eine zylindrische äußere Mantelfläche aufweist. Eine Schlingfeder mit mehreren Wicklungen ist um diese Mantelfläche herum angeordnet, wobei eine Rotation eines ersten Endes der Schlingfeder entgegen einer Betätigungsrichtung derart begrenzt ist, dass sich bei einer weiteren Rotation der Schlingfeder oder des zweiten Endes derselben entgegen der Betätigungsrichtung ein Durchmesser der Schlingfeder vergrößert, sodass ein Kraftschluss zwischen der Mantelfläche und der Schlingfeder gelöst wird. Das Betätigungselement weist ferner ein mittels eines Antriebs bzw. Aktuators um eine Achse in- und entgegen der Betätigungsrichtung drehbares Eingangselement auf, welches eine Mitnahmeeinrichtung besitzt. Diese wiederum ist ausgebildet, um die Schlingfeder bei einer Drehung in der Betätigungsrichtung derart mitzunehmen, dass sich ein Durchmesser der Schlingfeder verringert. Durch die Verringerung des Durchmessers der Schlingfeder kann diese eine kraftschlüssige Verbindung zwischen der Schlingfeder und dem Mitnehmer bilden, welcher somit über die Mitnahmeeinrichtung auch mit dem Eingangselement drehfest gekoppelt wird, sodass eine Rotation des Mitnehmers bewirkt wird, über dessen Anbindung an die Kupplung diese letztendlich betätigt werden kann. Kraftschlüssig bedeutet in diesem Zusammenhang, dass eine Verbindung, die eine Relativbewegung der miteinander verbundenen Komponenten in zumindest einer Richtung verhindert, durch eine zwischen den Komponenten senkrecht zur Verbindungsrichtung wirkende Kraft, die beispielsweise zu erhöhten Kohäsions- oder Adhäsionskräften führt, bewirkt wird. Ein Kraftschluss liegt insbesondere so lange vor, wie eine durch die Haftreibung bewirkte Kraft zwischen den Komponenten nicht überschritten wird.

Als Betätigungsrichtung soll hierin diejenige Richtung verstanden werden, die in der vorliegenden Konfiguration zur Betätigung der Kupplung führt. Dies kann, je nach Auslegung, sowohl eine Rotationsrichtung in- oder entgegengesetzt zum Uhrzeigersinn sein. Dies ist abhängig davon, ob "normally open" oder "normally closed" Kupplungen betätigt werden sollen, bzw. davon, wie der Aktuator bzw. mit welchen Rotationsrichtungen der Aktuator an das Eingangselement angebunden ist. Prinzipiell sind mit Ausführungsbeispielen verschleißausgleichender Betätigungselemente sowohl "normally open" als auch "normally closed" Kupplungen zu betätigen. Bei Kupplungen des Typs "normally closed" wird ohne Beaufschlagung einer externen Kraft von der Kupplung der Kraftfluss im Antriebsstrang aufrechterhalten. Kupplungen des Typs "normally open" trennen aufgrund ihrer Bauart ohne externe Krafteinwirkung den Kraftfluss im Antriebsstrang und stellen diesen erst bei Einwirken einer äußeren Kraft auf die Kupplungsanordnung bzw. Fahrzeugkupplung wieder her. Zur Vereinfachung der Darstellung wird in den nachfolgenden Absätzen die Auswirkung auf die mittels des Verbindungselements angesteuerte Fahrzeugkupplung lediglich für den Fall einer "normally closed" Fahrzeugkupplung beschrieben, wenngleich diese auch bei "normally open" Kupplungen verwendet werden können.

Ausführungsbeispiele der vorliegenden Erfindung ermöglichen auf diese Art und Weise, verschleißausgleichende Betätigungselemente zur Verfügung zu stellen, die beispielsweise in der axialen Richtung, in der die zum Ausrücken bzw. Betätigen einer Kupplung erforderliche Kraft aufzubringen ist, äußerst kompakt bauen. Gleichzeitig können die Ausführungsbeispiele der vorliegenden Erfindung ein hohes Moment bzw. eine hohe Kraft zur Betätigung einer Kupplung übertragen.

Gemäß einigen Ausführungsbeispielen der vorliegenden Erfindung ist das zweite Ende der Schlingfeder in- und entgegen der Betätigungsrichtung drehfest mit dem Eingangselement gekoppelt. Dies ermöglicht es beispielsweise, die zur Betätigung einer Kupplung erforderliche Kraft an dem zweiten Ende einzuleiten sowie das Lösen der Schlingfeder bzw. das Öffnen des Kraftschlusses zwischen dem Mitnehmer und der Schlingfeder zum Zweck des Verschleißausgleichs durch eine Bewegung entgegen der Betätigungsrichtung zu bewirken.

Gemäß einigen Ausführungsbeispielen wird dies ermöglicht, indem sich der am zweiten Ende der Schlingfeder in einer radialen Richtung nach außen weisende Endbereich bzw. Schenkel der Schlingfeder, wie er bei einer Vielzahl von am Markt erhältlichen Schlingfedern vorgesehen ist, in eine Ausnehmung in dem Eingangselement erstreckt.

Gemäß einigen weiteren Ausführungsbeispielen wird der Kraftübertrag vom Eingangselement zum Mitnehmer erreicht, indem die Mitnahmeeinrichtung einen mit dem Eingangselement drehfest verbundenen Koppelbereich aufweist, der benachbart zu dem Mitnehmer angeordnet und um dieselbe Achse drehbar gelagert ist, wobei dieser ferner eine zylindrische Mantelfläche aufweist, welche den selben Außendurchmesser besitzt wie die zylindrische Mantelfläche des Mitnehmers. Dabei erstreckt sich die Schlingfeder entlang ihrer axialen Ausdehnung in der zur Achse parallelen Richtung sowohl über den Mitnehmer als auch über den Koppelbereich. Dies ermöglicht, die Kraft von dem Eingangselement über die Mitnahmeeinrichtung bzw. den zylindrischen Bereich derselben kraftschlüssig auf den Mitnehmer zu übertragen, wenn sich, wie bei den Ausführungsbeispielen der Erfindung vorgesehen, bei einer Bewegung in der Betätigungsrichtung der Durchmesser der Schlingfeder verringert, sodass diese einen Kraftschluss zum zylindrischen Koppelbereich der Mitnahmeeinrichtung herstellt. Bei einigen dieser Ausführungsbeispiele ist eine Rotation eines zweiten Endes der Schlingfeder in der Betätigungsrichtung durch einen Anschlag im Eingangselement begrenzt, um bei einer Rotation des Eingangselements entgegen der Betätigungsrichtung einen Spielausgleich dadurch zu ermöglichen, dass sich ein Innendurchmesser der Schlingfeder vergrößert und somit ein Kraftschluss zwischen dem Koppelbereich und/oder dem Mitnehmer aufgehoben wird.

Gemäß einigen Ausführungsbeispielen der vorliegenden Erfindung weist das verschleißausgleichende Betätigungselement ferner eine Unterstützungseinrichtung auf, die derart mit dem Eingangselement gekoppelt ist, dass bei einer Rotation des Eingangselements in der Betätigungsrichtung von der Unterstützungseinrichtung eine zusätzliche, in der Betätigungsrichtung wirkende Kraft auf das Eingangselement ausgeübt wird. Dies kann bei einigen Ausführungsbeispielen zu einer weiteren Verringerung der Größe des Betätigungselements beitragen, da so beispielsweise der Aktuator, der das Betätigen der Kupplung bewirkt, geringer dimensioniert werden kann und nicht die vollständige zur Betätigung der Kupplung erforderliche Kraft aufbringen muss. Insbesonde-re ist gemäß einigen Ausführungsbeispielen der Erfindung die Unterstützungseinrichtung mechanisch, beispielsweise mittels einer Feder, implementiert, um auf kostengünstige Art und Weise die permanent wirkende unterstützende Kraft auf das Eingangselement auszuüben.

Gemäß einigen Ausführungsbeispielen sind der Mitnehmer, das Eingangselement und die Schlingfeder in einem gemeinsamen Gehäuse angeordnet, welches durch seine Form einen Anschlag für die Schlingfeder bildet, der die Bewegung des ersten Endes der Schlingfeder entgegen der Betätigungsrichtung begrenzt. Dies macht ein zusätzliches Bauteil zur Begrenzung der Rotation der Schlingfeder überflüssig.

Gemäß einigen Ausführungsbeispielen umfasst ein verschleißausgleichendes Betätigungselement ferner einen Antrieb, der mit dem Eingangselement derart gekoppelt ist, dass das Eingangselement mittels des Antriebs in- und entgegen der Betätigungsrichtung rotiert werden kann. Dieses kann beispielsweise als ein eigenständiges Modul sämtliche zur Betätigung der Kupplung erforderlichen, aufeinander abgestimmten Komponenten aufweisen, sodass mittels eines solchen Moduls eine bestehende Kupplung beispielsweise mit einem elektromotorischen Antrieb nachgerüstet werden kann.

Bevorzugte Ausführungsbeispiele der vorliegenden Erfindung werden nachfolgend, bezugnehmend auf die beigefügten Figuren, näher erläutert. Es zeigen:
- Fig. 1: eine isometrische Darstellung eines Ausführungsbeispiels eines verschlei ßausgleichenden Betätigungselements;
- Fig. 2: eine Explosionsdarstellung des Ausführungsbeispiels von Fig. 1;
- Fig. 3: eine Ansicht und einen Schnitt durch das Ausführungsbeispiel von Fig. 1;
- Fig. 4: eine Ansicht auf das Ausführungsbeispiel von Fig. 1 im Ruhezustand vor der Betätigung einer Kupplung;
- Fig. 5: das Ausführungsbeispiel von Fig. 1 während der Betätigung, bei gerade hergestelltem Kraftschluss zwischen Schlingfeder und Mitnehmer;
- Fig. 6: das Ausführungsbeispiel der Fig. 1 nach der Betätigung, d. h. nach vollständiger Rotation in der Betätigungsrichtung;
- Fig. 7: das Ausführungsbeispiel der Figur 1 in der zu Fig. 4 korrespondierenden Bewegungsphase, nach vollständig erfolgtem Verschleißausgleich;
- Fig. 8: das Ausführungsbeispiel der Figur 1 in der zu Fig. 5 korrespondierenden Bewegungsphase, nach vollständig erfolgtem Verschleißausgleich;
- Fig. 9: das Ausführungsbeispiel der Figur 1 in der zu Fig. 6 korrespondierenden Bewegungsphase, nach vollständig erfolgtem Verschleißausgleich;
- Fig. 10: eine isometrische Darstellung eines weiteren Ausführungsbeispiels eines verschleißausgleichenden Betätigungselements;
- Fig. 11: eine Explosionsdarstellung des Ausführungsbeispiels von Fig. 10;
- Fig. 12: eine Ansicht und einen Schnitt durch das Ausführungsbeispiel von Fig. 10;
- Fig. 13: eine Ansicht auf das Ausführungsbeispiel von Fig. 10 im Ruhezustand vor der Betätigung einer Kupplung;
- Fig. 14: das Ausführungsbeispiel von Fig. 10 während der Betätigung, bei gerade hergestelltem Kraftschluss zwischen Schlingfeder und Mitnehmer;
- Fig. 15: das Ausführungsbeispiel der Fig. 10 nach der Betätigung, d. h. nach vollständiger Rotation in der Betätigungsrichtung;
- Fig. 16: das Ausführungsbeispiel der Figur 10 in der zu Fig. 13 korrespondierenden Bewegungsphase, nach vollständig erfolgtem Verschleißausgleich;
- Fig. 17: das Ausführungsbeispiel der Figur 10 in der zu Fig. 14 korrespondierenden Bewegungsphase, nach vollständig erfolgtem Verschleißausgleich; und
- Fig. 18: das Ausführungsbeispiel der Figur 10 in der zu Fig. 15 korrespondierenden Bewegungsphase, nach vollständig erfolgtem Verschleißausgleich.

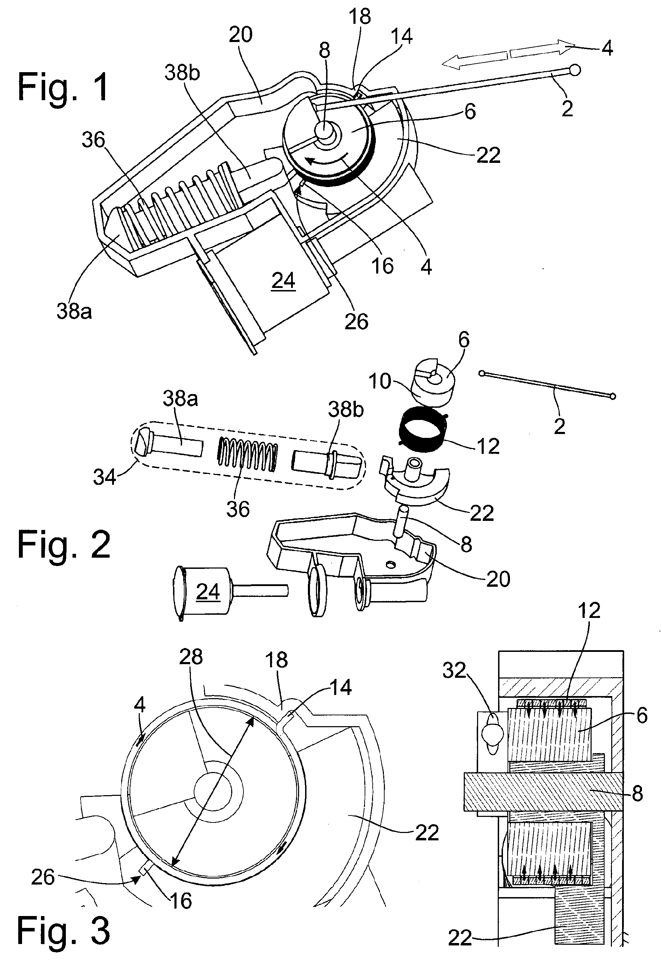

Fig. 1 zeigt eine isometrische Darstellung eines Ausführungsbeispiels eines verschleißausgleichenden Betätigungselements für eine Kupplung. Dabei werde für die folgende Darstellung ohne Beschränkung der Allgemeinheit angenommen, dass es sich bei der mittels des Betätigungselements betätigten Kupplung um eine Kupplung des Typs "normally closed" handelt, die rechts von dem in Fig. 1 dargestellten Betätigungselement angeordnet ist. Eine Betätigung der Kupplung, d. h. ein Öffnen derselben, erfolgt über einen Stößel 2, der zur Betätigung bzw. zum Ausrücken der Kupplung in die Betätigungsrichtung 4 bewegt wird.

Das Betätigungselement bzw. dessen Komponenten werden nachfolgend zusammen mit der Explosionsdarstellung von Fig. 2 beschrieben, die teilweise die einzelnen in dem Betätigungselement vorhandenen Komponenten noch genauer darstellt. Die Kupplung wird über den Stößel 2 und dieser wiederum über einen Mitnehmer 6 betätigt, mittels dessen der Stößel 2 in- und entgegen der Betätigungsrichtung 4 bewegt werden kann. Zu diesem Zweck ist der Mitnehmer 6 in- und entgegen der Bewegungsrichtung 4 rotierbar und um eine Achse 8 drehbar gelagert. Dabei wird nachfolgend der Begriff Betätigungsrichtung synonym sowohl für die Translationsbewegung des Stößels 2 als auch für die Rotationsbewegung des Mitnehmers 6 verwendet, die, wie anhand von Fig. 1 ersichtlich, zueinander korrespondieren. Der Mitnehmer 6 weist zur nachfolgend detaillierter beschriebenen Kraftübertragung eine zylindrische Mantelfläche 10 auf. Eine Schlingfeder 12, die mehrere Wicklungen aufweist, ist um die Mantelfläche 10 des Mitnehmers 6 herum angeordnet. Als Schlingfeder wird hierin im üblichen Sinne eine gewickelte Federanordnung verstanden, deren Mehrzahl von koaxialen Wicklungen in einer axialen Richtung zueinander benachbart sind und deren Funktionsprinzip darauf beruht, dass ein Innendurchmesser der Wicklungen variiert werden kann, wodurch ein Kraftschluss mit einem innerhalb der Schlingfeder angeordneten Gegenstand, d. h. vorliegend mit dem Mitnehmer 6, hergestellt und getrennt werden kann.

Die Schlingfeder 12 weist am Ende ihrer Wicklungen jeweils ein Ende auf, das erste Ende 14 und das zweite Ende 16. Die Rotation des ersten Endes 14 der Schlingfeder 12 wird entgegen der Betätigungsrichtung 4 durch einen Absatz 18 in einem das Betätigungselement umschließenden Gehäuse 20 begrenzt. Ein bezüglich der Achse 8 drehbar gelagertes Eingangselement 22 ist, über eine hier der Einfachheit halber nicht dargestellte Verzahnung, mittels eines nur schematisch dargestellten Elektromotors 24 in- und entgegen der Betätigungsrichtung 4 um die Achse 8 rotierbar. Das Eingangselement 22 weist vorliegend eine Mitnahmeeinrichtung 26 in Form einer Nut in dem Eingangselement 22 auf, in die sich das zweite Ende 16 der Schlingfeder 12 erstreckt, sodass das zweite Ende 16 der Schlingfeder 12 in- und entgegen der Betätigungsrichtung 4 drehfest mit dem Eingangselement 22 gekoppelt bzw. verbunden ist.

Wird mittels des Elektromotors 24 das Eingangselement 22 in der Betätigungsrichtung 4 rotiert, wird über die Mitnahmeeinrichtung 26 die Schlingfeder 12 an dessen zweiten Ende 14 mitgenommen. Ist diese beispielsweise mit einer Vorspannung auf dem Mitnehmer 6 montiert, d. h., liegt diese ohne Einwirken einer äußeren Kraft im unbelasteten Zustand an der zylindrischen Mantelfläche 10 des Mitnehmers 6 an, folgt das zweite Ende 16 der Schlingfeder 12 der Drehbewegung, wobei sich gleichzeitig ein Innendurchmesser 28 der Schlingfeder 12 verringert. Bei der in den Fig. 1 bis 3 gezeigten Ruheposition des Betätigungselements, d. h., bei der Position, bei der die Kupplung nicht betätigt wird, ist der Innendurchmesser 28 der Schlingfeder größer als der Durchmesser der zylindrischen Mantelfläche 10 des Mitnehmers. Dies wird insbesondere dadurch erreicht, dass die Schlingfeder 12 mit ihrem ersten Ende 14 an dem Absatz 18 anliegt und dadurch an einer weiteren Rotation entgegen der Betätigungsrichtung 4 gehindert wird. Gleichzeitig wird die Feder durch die Mitnahmeeinrichtung 16 entgegen der Betätigungsrichtung 4 mit einer Kraft beaufschlagt, die durch die Festlegung der beiden Enden 14 und 16 zu einer Aufweitung der Feder, also zu einer Vergrößerung des Innendurchmessers 28 derselben führt.

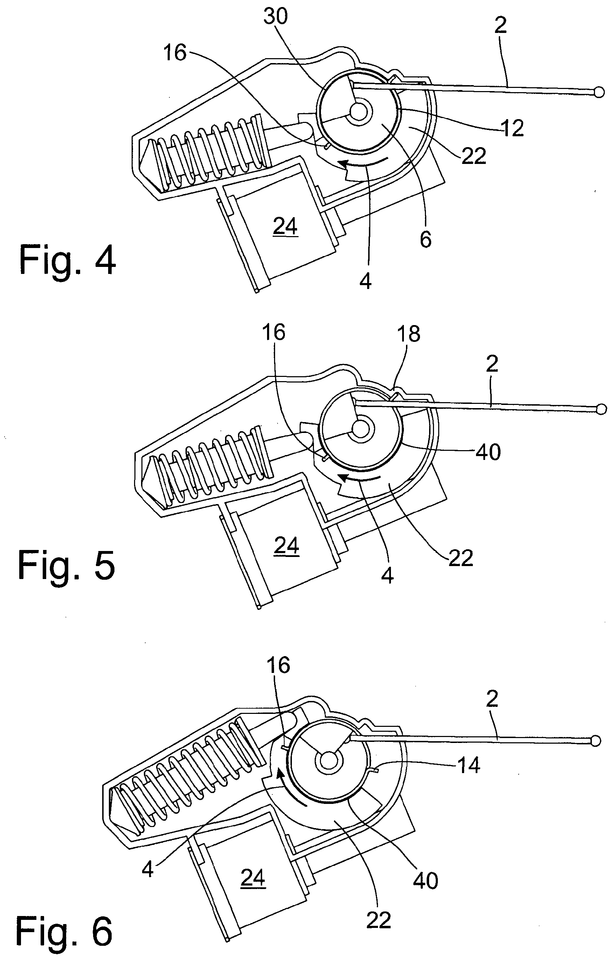

Dies ist auch aus den Schnittansichten in den Fig. 3 und 4 ersichtlich, die die Schlingfeder 22 im Grundzustand zeigen, in dem sich ein Spalt 30 zwischen der Schlingfeder 12 und dem Mitnehmer 6 einstellt. Bei einer Rotation des Eingangselements 22 in der Betätigungsrichtung 4 verringert sich der Innendurchmesser 28 der Schlingfeder 12, der Spalt 30 schließt sich und über den Kraftschluss zwischen der Schlingfeder 12 und dem Mitnehmer 6 kann die Kraft zur Betätigung der Kupplung vom Aktuator bzw. Elektromotor 24 auf den Mitnehmer übertragen werden, sodass die Kupplung betätigt werden kann.

Nach der Betätigung der Kupplung, in der sich das Betätigungselement erneut in der anhand der Fig. 1 bis 3 gezeigten Ausgangsstellung befindet, ist der Kraftschluss zwischen der Schlingfeder 12 und dem Mitnehmer 6 erneut aufgehoben, sodass sich dieser relativ zur Schlingfeder 12 zum Zwecke des Verschleißausgleiches drehen kann. Ein Verschleiß macht sich beispielsweise dadurch bemerkbar, dass sich der Stößel 2 aufgrund des Verschleißes in der Kupplung im unbelasteten Zustand an einer weiter entgegen der Betätigungsrichtung liegenden Position befindet als bei einer neuwertigen Kupplung. Zum Zwecke des Verschleißausgleichs kann somit der Mitnehmer 6 im Grundzustand von der Kupplung selbst entgegen der Betätigungsrichtung 4 in eine neue Ruhelage verdreht werden. Von der neuen Ruhelage aus kann eine weitere Betätigung der Kupplung mit identischem Aktuatorhub erfolgen. Der Verschleißausgleich funktioniert mit anderen Worten automatisch. Bei alternativen Ausführungsbeispielen kann zur Unterstützung des Verschleißausgleichs zusätzlich eine weitere, permanent entgegen der Betätigungsrichtung 4 auf den Mitnehmer 6 wirkende Kraft ausgeübt werden, beispielsweise mittels einer weiteren, im Innen- oder am Außendurchmesser des Betätigungselements angebrachten Schlingfeder.

Wenngleich bei dem in den Fig. 1 bis 3 gezeigten Ausführungsbeispiel, wie überwiegend in Fig. 3 ersichtlich, eine Ausnehmung 32 im Mitnehmer 6 dazu verwendet wird, die Stößelstange 2 und darüber die Kupplung an den Mitnehmer 6 anzubinden, versteht es sich von selbst, dass bei alternativen Ausführungsbeispielen beliebige andere Formen der Anbindung der Kupplung an das Betätigungselement bzw. dessen Mitnehmer implementiert sein können.

Den Aktuator bzw. Elektromotor 24 bei der Betätigung der Kupplung unterstützend, weist das in den Fig. 1 bis 3 gezeigte Ausführungsbeispiel ferner eine Unterstützungseinrichtung 34 auf, die mit dem Eingangselement 22 derart gekoppelt ist, dass bei einer Rotation des Eingangselements 22 in der Betätigungsrichtung 4 von der Unterstützungseinrichtung 34 eine zusätzliche, in der Betätigungsrichtung 4 wirkende Kraft auf das Eingangselement 22 ausgeübt wird. Dies dient dazu, den Aktuator bzw. Elektromotor 24 zu entlasten bzw. zu unterstützen, sodass dieser kleiner und kostengünstiger dimensioniert werden kann. Bei der in den Fig. 1 bis 3 gezeigten Ausführungsform der Unterstützungseinrichtung 34 weist diese zum Erzeugen einer permanent wirkenden Kraft eine Spiralfeder 36 auf, die zwischen zwei relativ zueinander beweglichen Stößelelementen 38a und 38b angeordnet ist, wobei sich das Stößelelement 38a am Gehäuse 20 abstützt und über das Stößelelement 38b die von der Spiralfeder 36 verursachte unterstützende Kraft auf das Eingangselement 22 übertragen wird.

Bei dem in den Fig. 1 bis 3 vorhergehend beschriebenen Ausführungsbeispielen erfolgt also die Kraftübertragung auf den Mitnehmer 6 über das zweite Ende 16 der Spiralfeder sowie über den Kraftschluss zwischen der Mantelfläche 10 des Mitnehmers 6 und der Schlingfeder 12.

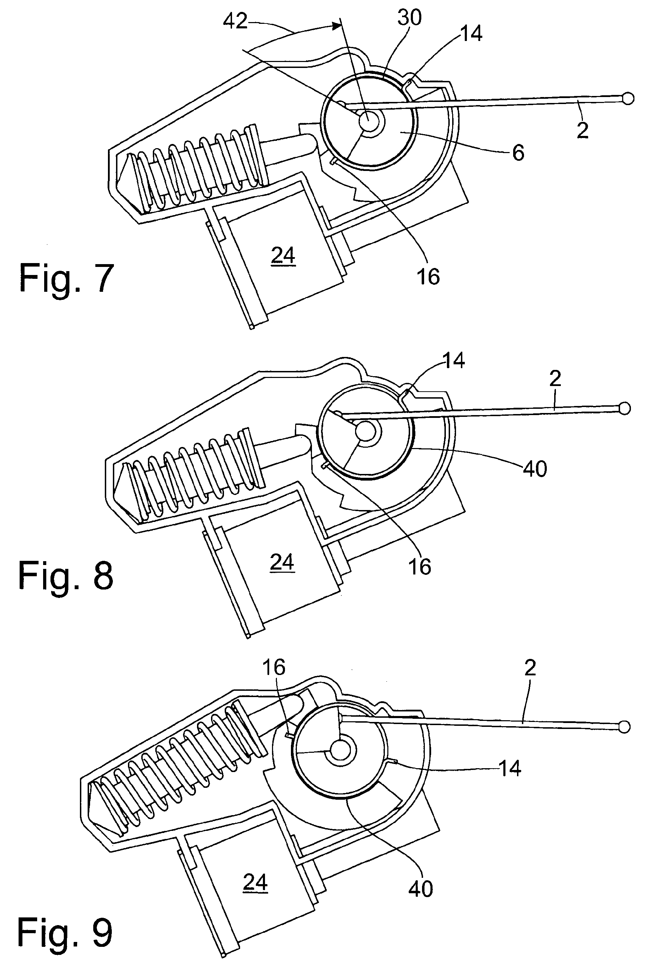

Die Fig. 4 bis 6 zeigen nachfolgend das Betätigungselement in unterschiedlichen Phasen während der Betätigung einer Kupplung, die noch keinem Verschleiß unterlegen ist. Die Fig. 7 bis 9 zeigen dieselben Phasen der Kupplungsbetätigung bei einer bereits verschlissenen Kupplung. Da die einzelnen Komponenten bzw. deren Funktionsweisen anhand der Fig. 1 bis 3 bereits in den vorhergehenden Absätzen eingehend diskutiert wurde, wird auf eine erneute Darstellung der Funktionalität derselben nachfolgend verzichtet. Vielmehr wird nachfolgend lediglich auf die relevanten Unterschiede der Darstellung der Fig. 4 bis 6 bzw. die sich ergebenden Unterschiede aufgrund des erfolgten Verschleißausgleichs im Hinblick auf die Fig. 7 bis 9 eingegangen werden.

Fig. 4 zeigt die Konfiguration in der Grundstellung, also bei eingekuppelter Kupplung, in der sich der Aktuator 24 in Grund- oder Ablageposition befindet. Wie anhand der Fig. 1 bis 3 erläutert, ist der Kraftschluss zwischen der Schlingfeder 12 und dem Mitnehmer 6 durch den Gehäuseanschlag 18 und die Mitnahmeeinrichtung 26 bzw. die Verbindung zum Zahnradsegment bzw. Eingangselement 22 gelöst, sodass sich der Spalt 30 zwischen Mitnehmer 22 und Schlingfeder 12 ergibt.

Fig. 5 zeigt die Situation zu Beginn der Betätigung der Kupplung, bei der das Eingangselement 22 mittels des Aktuators 24 bereits etwas in Betätigungsrichtung 4 rotiert wurde, sodass der Spalt 30 geschlossen wurde und ein Kraftschluss zwischen dem Mitnehmer 6 und der Schlingfeder 12 hergestellt ist, wodurch sich zwischen der Schlingfeder 12 und dem Eingangselement 22 der Mitnahmespalt 40 gebildet hat. Das heißt, spätestens ab der in Fig. 5 gezeigten Bewegungsphase wird die Rotation vom Eingangselement 22 auf den Mitnehmer 6 übertragen.

Fig. 6 zeigt das Betätigungselement bei vollständig betätigter Kupplung, d. h., wenn der Aktuator 24 ein Auskuppeln der Kupplung bewirkt hat. Da seit der Konfiguration in Fig. 5 der Spalt 30 zwischen Mitnehmer 6 und Schlingfeder 12 geschlossen ist, die Schlingfeder 12 also der Rotation folgt, ist bei der in Fig. 6 gezeigten Konfiguration das erste Ende 14 der Schlingfeder 12 vollständig vom Anschlag 18 im Gehäuse abgehoben, und der Stößel 2 befindet sich in der maximal in Betätigungsrichtung 4 verschobenen Position, die einer geöffneten Kupplung entspricht.

Die Fig. 7 bis 9 zeigen den Betätigungsvorgang zu denselben Zeitpunkten, die in den Fig. 4 bis 6 dargestellt sind, allerdings bei einer verschlissenen Kupplung, also in einer Konfiguration, in der ein Verschleißausgleich bereits stattgefunden hat. Wenngleich der eigentliche Betätigungsvorgang identisch ist, sodass für dessen Beschreibung auf die Fig. 4 bis 6 verwiesen werden kann, unterscheidet sich die Konstellation jeweils dadurch, dass aufgrund des stattgefundenen Verschleißausgleichs, der Stößel 2 sich in der Grundposition in Fig. 7 weiter links befindet als in Fig. 4. Das heißt mit anderen Worten, nach erfolgtem Verschleißausgleich ist der Mitnehmer 6, verglichen zu dessen Orientierung ohne Kupplungsverschleiß, entgegen der Betätigungsrichtung 4 um einen Verschleißwinkel 42 verdreht, welcher zu dem Verschleiß der Kupplung korrespondiert. Dazu korrespondierend ist der Mitnehmer 6 auch in den weiteren Bewegungsphasen der Fig. 8 und 9 verglichen mit den korrespondierenden Konfigurationen der Fig. 5 und 6 entgegen der Betätigungsrichtung 4 um den Verschleißwinkel 42 verdreht.

Mit anderen Worten zeigen die Fig. 1 bis 9 ein verschleißausgleichendes Verbindungselement in verschiedenen Phasen während des Lebenszyklus einer Kupplung und in verschiedenen Konfigurationen während eines Betätigungsvorgangs einer "normally closed" Kupplung. Die Fig. 4 und 7 zeigen das Betätigungselement bzw. den Aktuator zunächst in Ruhestellung in eingekuppelter Position. In dieser Position steht der Aktuator bzw. der Mitnehmer 6 in Ruheposition komplett gegen den Uhrzeigersinn verdreht am Gehäuseanschlag 18. Die Schlingfeder 12 stützt sich hier mit einem Schenkel 14 an einem dafür bereitgestellten Gehäuseanschlag 18 gegen eine Nut 26 im Zahnradsegment ab. In dieser Position wird sie von der in Übertotpunktlage positionierten Kompensationsfeder 36 über das Zahnradsegment bzw. das Eingangselement 22 gespannt gehalten. Durch das Aufspannen der beiden abgebogenen Schenkel 14 und 16 der Schlingfeder 12 wird der Durchmesser 28 derselben aufgeweitet. Diese Aufweitung führt zu einem Verlust des Momentenflusses vom Mitnehmer 6 zum Zahnradsegment bzw. Eingangselement 22. Der Mitnehmer 6 ist nun frei drehbar (gelagert auf Achse 8 oder auf dem Zahnradsegment bzw. Eingangselement 22) und eine Verschleißnachstellung der Kupplung kann erfolgen. Eine Vorlast, welche für den Betrieb einer Kupplung erforderlich sein kann, kann durch ein geeignetes Federelement aufgebracht werden, welches hier der Übersichtlichkeit halber nicht dargestellt ist.

Um die Kupplung zu betätigen, wird das Zahnradsegment bzw. das Eingangselement 22 über den Elektromotor 24 im Uhrzeigersinn, also in Betätigungsrichtung 4, verdreht. Durch diese Verdrehung wird die Spannung in der Schlingfeder 12 reduziert, bis diese kraftschlüssig am Mitnehmer 6 anliegt, wie in den Fig. 5 und 8 dargestellt ist. Die mit Vorspannung auf dem Mitnehmer 6 montierte Schlingfeder 12 kann nun eine Momentenübertragung vom Eingangselement 22 bzw. Zahnradsegment auf den Mitnehmer 6 erwirken. Jede weitere Verdrehung des Eingangselements 22 führt nun zu einer Verdrehung des Mitnehmers 6 und der Schlingfeder 12. Der Motor 24 wird durch die kontinuierliche Verdrehung des Eingangselements 22 immer weiter durch die Kompensationsfeder bzw. die Unterstützungseinrichtung 34 unterstützt.

Nach der Betätigung der Kupplung kann diese in umgekehrter Verdrehrichtung wieder geschlossen werden. Das Eingangselement 22 wird dafür vom Elektromotor 24 gegen den Uhrzeigersinn bzw. gegen die Betätigungsrichtung 4 verdreht, bis sich das erste Ende 14 bzw. der erste Arm der Schlingfeder 12 wieder vom Gehäuse 20 zum Eingangselement 22 abstützt. Durch das gegenseitige Abstützten der Federenden 14 und 16 wird die Schlingfeder 12 wieder geweitet und die kraftschlüssige Verbindung von Schlingfeder 12 und Mitnehmer 6 gelöst. Der Mitnehmer 6 ist nun wieder frei beweglich und ein Verschleißausgleich kann erfolgen. Das Eingangselement wird wieder bis an einen Gehäuseanschlag zurückverdreht, wo es von der Kompensationsfeder bzw. der Unterstützungseinrichtung 34 in Endstellung gehalten wird.

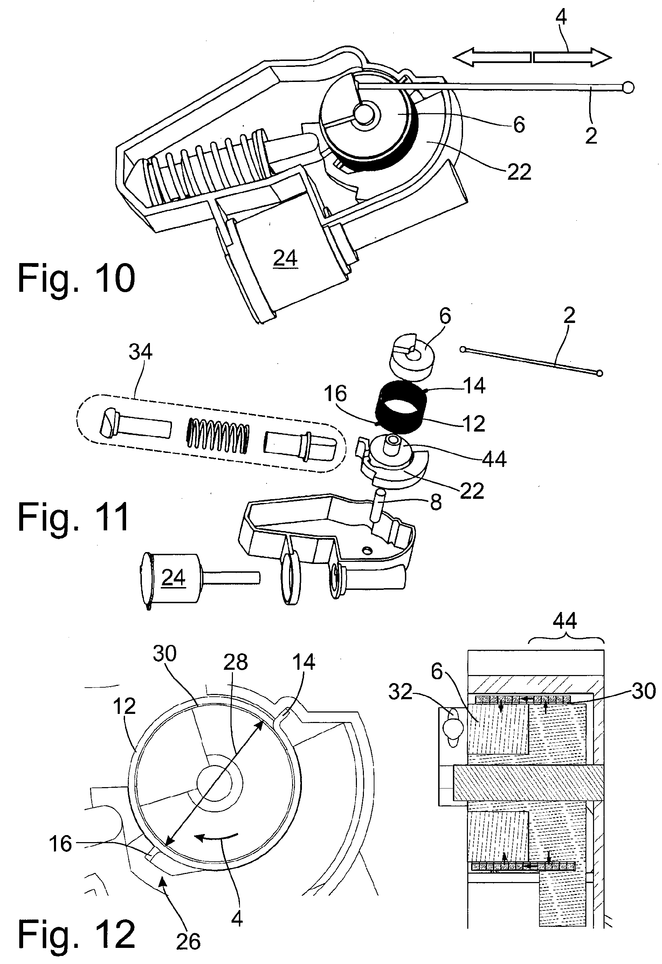

Das nachfolgend anhand der Fig. 10 bis 18 beschriebene Ausführungsbeispiel unterscheidet sich überwiegend im Hinblick auf die Kraftübertragung von dem in den Fig. 1 bis 9 gezeigten Ausführungsbeispiel. Während in den Ausführungsbeispielen der Fig. 1 bis 9 die Schlingfeder 12 als sogenannte Lastsperre eingesetzt wird, wird nachfolgend eine Konfiguration beschrieben, in der die Schlingfeder 12 als Kupplung verwendet wird. Das Ausführungsbeispiel der Fig. 10 unterscheidet sich von dem der Fig. 1 mithin durch die Art der Momentenübertragung vom Eingangselement 22 auf die Schlingfeder 12. Während bei dem in Fig. 1 gezeigten Ausführungsbeispiel das komplette Lastdrehmoment durch den abstehenden Schenkel bzw. das zweite Ende 16 der Schlingfeder eingeleitet und auf den Mitnehmer 6 übertragen wird, wird bei dem in Fig. 10 dargestellten Ausführungsbeispiel das komplette Lastdrehmoment kraftschlüssig bzw. reibungsvermittelt vom Eingangselement 22 in die Schlingfeder 12 eingeleitet und von dort kraft- bzw. reibschlüssig in den Mitnehmer 6 übertragen.

Die nachfolgende kurze Beschreibung des in den Fig. 10 bis 12 im Detail dargestellten Ausführungsbeispiels wird sich, zur Vermeidung von Wiederholungen, daher auf den geänderten Mechanismus zur Übertragung des Lastdrehmoments beschränken, wobei bezüglich der übrigen Elemente auf die Beschreibung der Fig. 1- 6 verwiesen wird.

Anders als bei dem in Fig. 1 dargestellten Ausführungsbeispiel umfasst bei dem in Fig. 10 dargestellten Ausführungsbeispiel die Mitnahmeeinrichtung einen zylindrischen Koppelbereich 44. Dieser ist axial benachbart zum Mitnehmer 6 angeordnet, um dieselbe Achse 8 wie dieser drehbar und weist eine zylindrische Mantelfläche auf, die denselben Durchmesser hat, wie die zylindrische Mantelfläche 10 des Mitnehmers 6. Die Schlingfeder 12 erstreckt sich entlang ihrer Ausdehnung in der zur Achse 8 parallelen axialen Richtung sowohl über den Mitnehmer 6 als auch über den Koppelbereich 44. Wird zur Betätigung der Kupplung das Eingangselement 22 zusammen mit dem mit diesem drehfest verbundenen Koppelbereich 44 in Rotation versetzt, verringert sich der Durchmesser 28 der Schlingfeder und diese legt sich an die zylindrischen Mantelflächen des Mitnehmers 6 und des Koppelbereichs 44 an, um so eine reibungsvermittelte kraftschlüssige Verbindung mit dem Mitnehmer 6 und dem Koppelbereich 44 einzugehen. Entgegen dem in Fig. 1 gezeigten Ausführungsbeispiel wird bei dem in Fig. 10 gezeigten Ausführungsbeispiel also auch die Einleitung des Drehmoments in die Schlingfeder 12 reibungsvermittelt vorgenommen.

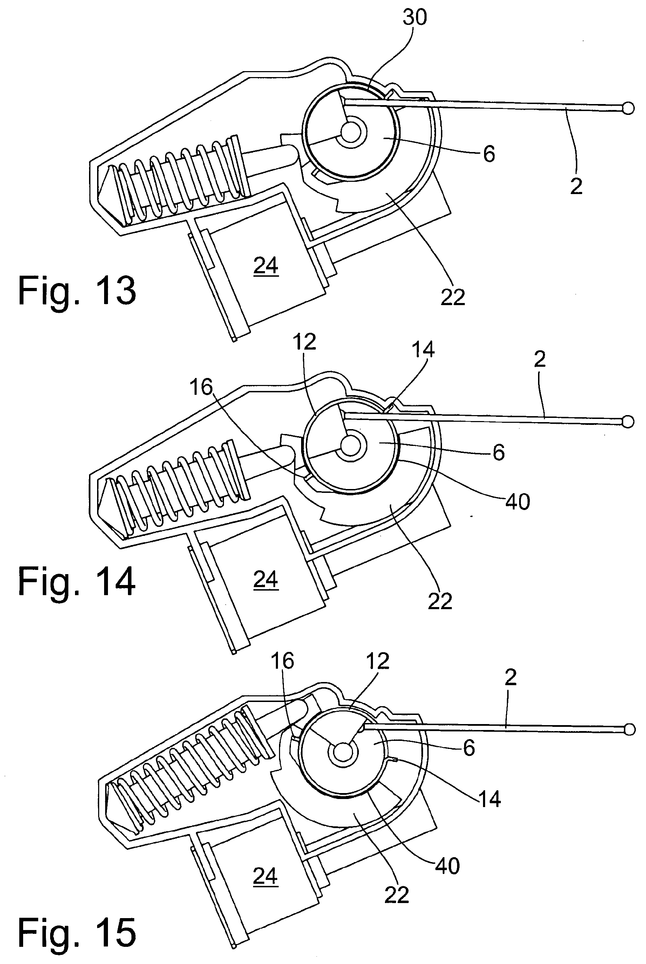

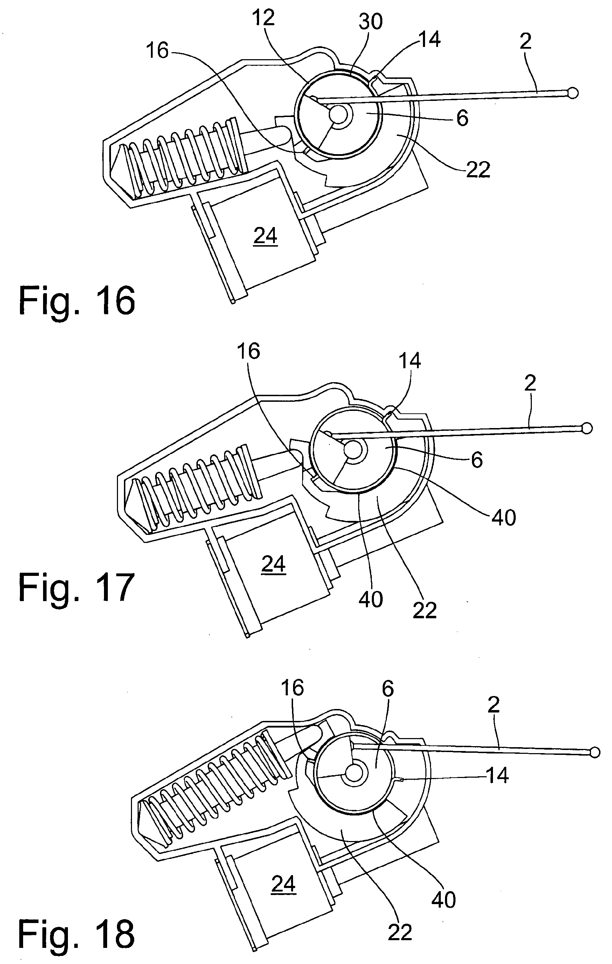

Die übrige Funktionsweise entspricht derjenigen des in Fig. 1 gezeigten Ausführungsbeispiels, sodass zur Beschreibung der übrigen Komponenten auf die Beschreibung dieses Ausführungsbeispiels verwiesen wird. Selbiges gilt für die anhand der Fig. 13 bis 18 dargestellten Bewegungsphasen während des Betätigens der Kupplung, wobei die Bewegungsphasen der Fig. 13 bis 15 denen der Fig. 4 bis 6 entsprechen, und die Betätigung einer noch nicht einem Verschleiß unterworfenen Kupplung zeigen. Dementsprechend zeigen die Fig. 16 bis 18 die den Fig. 7 bis 9 entsprechenden Bewegungsphasen während der Kupplungsbetätigung einer bereits verschlissenen Kupplung, d. h., wenn ein Verschleißausgleich im Betätigungselement bereits auf die im Vorhergehenden beschriebene Art und Weise stattgefunden hat.

Wenngleich anhand der vorhergehenden Ausführungsbeispiele überwiegend im Zusammenhang mit einer Kupplung für ein Personenkraftfahrzeug beschrieben, versteht es sich von selbst, dass alternative Ausführungsformen von verschleißausgleichenden Verbindungselementen auch in beliebigen anderen Anwendungen im Maschinenbau verwendet werden können, beispielsweise bei Kupplungen für stationäre Maschinen, Lkws, oder anderen Maschinen, bei denen Kraft an eine einem Verschleiß unterliegende Komponente übertragen werden soll.

### Bezugszeichen

- 2: Stößel
- 4: Betätigungsrichtung
- 6: Mitnehmer
- 8: Achse
- 10: zylindrische Mantelfläche
- 12: Schlingfeder
- 14: erstes Ende
- 16: zweites Ende
- 18: Absatz
- 20: Gehäuse
- 22: Eingangselement
- 24: Elektromotor
- 26: Mitnahmeeinrichtung
- 28: Innendurchmesser
- 30: Spalt
- 32: Ausnehmung
- 34: Unterstützungseinrichtung
- 36: Spiralfeder
- 38a, b: Stößelelement
- 40: Mitnahmespalt
- 42: Verschleißwinkel
- 44: Koppelbereich

## Patentansprüche

1. Verschleißausgleichendes Betätigungselement für eine Kupplung, mit folgenden Merkmalen:
einem bezüglich einer Achse (8) drehbaren Mitnehmer (6) zur Anbindung an die Kupplung, wobei der Mitnehmer (6) einen Bereich mit einer zylindrische Mantelfläche (10) umfasst;
einer Schlingfeder (12) mit mehreren Wicklungen, die um die Mantelfläche (10) angeordnet ist; und
einem mittels eines Antriebes (24) um eine Achse in der Betätigungsrichtung (4) und entgegen der Betätigungsrichtung (4) drehbaren Eingangselement (22), wobei das Eingangselement (22) eine Mitnahmeeinrichtung (26) aufweist, die ausgebildet ist, um die Schlingfeder (12) bei einer Drehung in der Betätigungsrichtung (4) derart mitzunehmen, dass sich ein Durchmesser (28) der Schlingfeder (12) verringert,
**dadurch gekennzeichnet, dass**
eine Rotation eines ersten Endes (14) der Schlingfeder (12) entgegen einer Betätigungsrichtung (4) derart begrenzt ist, dass sich bei einer weiteren Rotation entgegen der Betätigungsrichtung (4) ein Durchmesser der Schlingfeder (12) vergrößert.

2. Verschleißausgleichendes Betätigungselement nach Anspruch 1, bei dem die Mitnahmeeinrichtung (26) ausgebildet ist, um ein zweites Ende (16) der Schlingfeder (12) in- und entgegen der Betätigungsrichtung (4) drehfest mit dem Eingangselement (22) zu koppeln.

3. Verschleißausgleichendes Betätigungselement nach Anspruch 2, bei dem die Mitnahmeeinrichtung (26) eine Ausnehmung in dem Eingangselement (22) umfasst, in die sich ein am zweiten Ende der Schlingfeder (26) in einer radialen Richtung nach außen weisender Endbereich der Schlingfeder (12) erstreckt.

4. Verschleißausgleichendes Betätigungselement nach Anspruch 1, bei dem die Mitnahmeeinrichtung (26) einen mit dem Eingangselement (22) drehfest verbundenen Koppelbereich (44) aufweist, der konzentrisch mit und benachbart zu dem Mitnehmer (6) angeordnet und um die Achse (8) drehbar gelagert ist sowie eine zylindrische Mantelfläche aufweist, die denselben Außendurchmesser besitzt wie die zylindrische Mantelfläche (10) des Mitnehmers (6), wobei sich die Schlingfeder (12) entlang ihrer Ausdehnung in einer zu der Achse (8) parallelen axialen Richtung sowohl über den Mitnehmer (6) als auch über den Koppelbereich (44) erstreckt.

5. Verschleißausgleichendes Betätigungselement nach einem Anspruch 4, bei dem eine Rotation eines zweiten Endes (16) der Schlingfeder (12) in der Betätigungsrichtung (4) begrenzt ist.

6. Verschleißausgleichendes Betätigungselement nach einem der vorhergehenden Ansprüche, das ferner eine mit dem Eingangselement (22) derart gekoppelte Unterstützungseinrichtung (34) aufweist, dass bei einer Rotation des Eingangselements (22) in der Betätigungsrichtung (4) von der Unterstützungseinrichtung (34) eine zusätzliche, in der Betätigungsrichtung (4) wirkende Kraft auf das Eingangselement (22) ausgeübt wird.

7. Verschleißausgleichendes Betätigungselement nach Anspruch 6, bei der die Unterstützungseinrichtung (34) eine Feder umfasst.

8. Verschleißausgleichendes Betätigungselement nach einem der vorhergehenden Ansprüche, bei dem der Mitnehmer (6), das Eingangselement (22) und die Schlingfeder (12) in einem gemeinsamen Gehäuse (22) angeordnet sind, welches einen Anschlag für die Schlingfeder (12) aufweist, mittels dessen die Rotation des ersten Endes (14) der Schlingfeder (12) entgegen der Betätigungsrichtung (4) begrenzt wird.

9. Verschleißausgleichendes Betätigungselement nach einem der vorhergehenden Ansprüche, bei der die Mitnehmer (6) ferner ein Befestigungseinrichtung (32) umfasst, die ausgebildet ist, an die ein weiteres Bauteil zur Kraftübertragung angebunden zu werden.

10. Verschleißausgleichendes Betätigungselement nach Anspruch 9, bei dem die Befestigungseinrichtung (32) eine Bohrung zur Aufnahme eines Stößels (2) aufweist.

11. Verschleißausgleichendes Betätigungselement nach einem der vorhergehenden Ansprüche, mit folgendem zusätzlichen Merkmal:
einem Antrieb (24), der mit dem Eingangselement (22) derart gekoppelt ist, dass das Eingangselement (22) mittels des Antriebs (24) in- und entgegen der Betätigungsrichtung (4) rotiert werden kann.

12. Verschleißausgleichendes Betätigungselement nach Anspruch 11, bei der der Antrieb (24) ein Elektromotor ist.

## Claims

1. Wear-compensating actuation element for a clutch, having the following features:
a driver (6), which is rotatable with respect to a spindle (8), for connection to the clutch, wherein the driver (6) comprises a region with a cylindrical shell surface (10);
a wrap spring (12) with multiple windings, which wrap spring is arranged around the shell surface (10); and
an input element (22) which is rotatable about a spindle in the actuation direction (4) and counter to the actuation direction (4) by way of a drive (24), wherein the input element (22) has a driver device (26) which is designed to drive the wrap spring (12), in the event of a rotation in the actuation direction (4), such that a diameter (28) of the wrap spring (12) decreases,
**characterized in that**
a rotation of a first end (14) of the wrap spring (12) counter to an actuation direction (4) is limited in that, in the event of a further rotation counter to the actuation direction (4), a diameter of the wrap spring (12) increases.

2. Wear-compensating actuation element according to Claim 1, in which the driver device (26) is designed to couple a second end (16) of the wrap spring (12) to the input element (22) rotationally conjointly in and counter to the actuation direction (4).

3. Wear-compensating actuation element according to Claim 2, in which the driver device (26) comprises a recess in the input element (22), into which recess there extends an end region of the wrap spring (12), which end region points outward in a radial direction at the second end of the wrap spring (26).

4. Wear-compensating actuation element according to Claim 1, in which the driver device (26) has a coupling region (44), which is connected rotationally conjointly to the input element (22) and which is arranged concentrically with respect to and adjacent to the driver (6) and which is mounted so as to be rotatable about the spindle (8), and has a cylindrical shell surface, which is of the same outer diameter as the cylindrical shell surface (10) of the driver (6), wherein the wrap spring (12), along its extent, extends in an axial direction parallel to the spindle (8) both over the driver (6) and over the coupling region (44).

5. Wear-compensating actuation element according to a Claim 4, in which a rotation of a second end (16) of the wrap spring (12) in the actuation direction (4) is limited.

6. Wear-compensating actuation element according to one of the preceding claims, which furthermore has an assistance device (34) which is coupled to the input element (22) in such a way that, during a rotation of the input element (22) in the actuation direction (4), an additional force, which acts in the actuation direction (4), is exerted on the input element (22) by the assistance device (34).

7. Wear-compensating actuation element according to Claim 6, in which the assistance device (34) comprises a spring.

8. Wear-compensating actuation element according to one of the preceding claims, in which the driver (6), the input element (22) and the wrap spring (12) are arranged in a common housing (22) which has an abutment for the wrap spring (12), by way of which abutment the rotation of the first end (14) of the wrap spring (12) counter to the actuation direction (4) is limited.

9. Wear-compensating actuation element according to one of the preceding claims, in which the driver (6) furthermore comprises a fastening device (32) which is designed to be connected to a further component for force transmission.

10. Wear-compensating actuation element according to Claim 9, in which the fastening device (32) has a bore for receiving a plunger (2).

11. Wear-compensating actuation element according to one of the preceding claims, having the following additional feature:
a drive (24) which is coupled to the input element (22) in such a way that the input element (22) can be rotated in and counter to the actuation direction (4) by way of the drive (24).

12. Wear-compensating actuation element according to Claim 11, in which the drive (24) is an electric motor.

## Revendications

1. Élément d'actionnement compensateur d'usure pour un embrayage, comprenant les caractéristiques suivantes :
un élément d'entraînement (6) pouvant tourner par rapport à un axe (8) pour le raccordement à l'embrayage, l'élément d'entraînement (6) comprenant une région avec une surface d'enveloppe cylindrique (10) ;
un ressort enroulé (12) comprenant plusieurs enroulements, lequel est disposé autour de la surface d'enveloppe (10) ; et
un élément d'entrée (22) pouvant tourner au moyen d'un entraînement (24) autour d'un axe dans la direction d'actionnement (4) et dans la direction opposée à la direction d'actionnement (4), l'élément d'entrée (22) présentant un dispositif d'entraînement (26) qui est réalisé de manière à entraîner avec lui le ressort enroulé (12) lors d'une rotation dans la direction d'actionnement (4) de telle sorte qu'un diamètre (28) du ressort enroulé (12) diminue,
**caractérisé en ce**
**qu'**une rotation d'une première extrémité (14) du ressort enroulé (12) dans une direction opposée à la direction d'actionnement (4) est limitée par le fait que lors d'une rotation supplémentaire dans la direction opposée à la direction d'actionnement (4), un diamètre du ressort enroulé (12) augmente.

2. Élément d'actionnement à compensation d'usure selon la revendication 1, dans lequel le dispositif d'entraînement (26) est réalisé de manière à accoupler une deuxième extrémité (16) du ressort enroulé (12) dans la direction d'actionnement et dans la direction opposée à la direction d'actionnement (4) de manière solidaire en rotation avec l'élément d'entrée (22).

3. Élément d'actionnement à compensation d'usure selon la revendication 2, dans lequel le dispositif d'entraînement (26) comprend un évidement dans l'élément d'entrée (22), dans lequel s'étend une région d'extrémité du ressort enroulé (12) tournée vers l'extérieur dans une direction radiale au niveau de la deuxième extrémité du ressort enroulé (26).

4. Élément d'actionnement à compensation d'usure selon la revendication 1, dans lequel le dispositif d'entraînement (26) présente une région d'accouplement (44) connectée de manière solidaire en rotation à l'élément d'entrée (22), laquelle est disposée concentriquement à l'élément d'entraînement (6) et à côté de celui-ci et est supportée de manière à pouvoir tourner autour de l'axe (8) et présente une surface d'enveloppe cylindrique qui possède le même diamètre extérieur que la surface d'enveloppe cylindrique (10) de l'élément d'entraînement (6), le ressort enroulé (12) s'étendant le long de son étendue dans une direction axiale parallèle à l'axe (8) à la fois par-dessus l'élément d'entraînement (6) et par-dessus la région d'accouplement (44).

5. Élément d'actionnement à compensation d'usure selon une revendication 4, dans lequel une rotation d'une deuxième extrémité (16) du ressort enroulé (12) dans la direction d'actionnement (4) est limitée.

6. Élément d'actionnement à compensation d'usure selon l'une quelconque des revendications précédentes, qui présente en outre un dispositif d'assistance (34) accouplé à l'élément d'entrée (22) de telle sorte que lors d'une rotation de l'élément d'entrée (22) dans la direction d'actionnement (4) une force supplémentaire agissant dans la direction d'actionnement (4) soit exercée sur l'élément d'entrée (22) par le dispositif d'assistance (34).

7. Élément d'actionnement à compensation d'usure selon la revendication 6, dans lequel le dispositif d'assistance (34) comprend un ressort.

8. Élément d'actionnement à compensation d'usure selon l'une quelconque des revendications précédentes, dans lequel l'élément d'entraînement (6), l'élément d'entrée (22) et le ressort enroulé (12) sont disposés dans un boîtier commun (22) qui présente une butée pour le ressort enroulé (12), au moyen de laquelle la rotation de la première extrémité (14) du ressort enroulé (12) dans la direction opposée à la direction d'actionnement (4) est limitée.

9. Élément d'actionnement à compensation d'usure selon l'une quelconque des revendications précédentes, dans lequel l'élément d'entraînement (6) comprend en outre un dispositif de fixation (32) qui est réalisé de manière à être raccordé à un composant supplémentaire en vue du transfert de force.

10. Élément d'actionnement à compensation d'usure selon la revendication 9, dans lequel le dispositif de fixation (32) présente un alésage pour recevoir une tige-poussoir (2).

11. Élément d'actionnement à compensation d'usure selon l'une quelconque des revendications précédentes, comprenant la caractéristique supplémentaire suivante :
un entraînement (24) qui est accouplé à l'élément d'entrée (22) de telle sorte que l'élément d'entrée (22) puisse être tourné au moyen de l'entraînement (24) dans la direction d'actionnement et dans la direction opposée à la direction d'actionnement (4).

12. Élément d'actionnement à compensation d'usure selon la revendication 11, dans lequel l'entraînement (24) est un moteur électrique.
